# EUROPEAN PATENT APPLICATION

(11) **EP 3 348 749 A1**
(43) Date of publication of application: **18.07.2018**
(21) Application number: 18150377.2
(22) Date of filing: 04.01.2018
(51) Int. Cl.: E04H 4/16

(54) **METHOD AND DEVICE FOR REMOTELY CONTROLLING ROBOTIC POOL CLEANER**

(30) Priority: 17.01.2017 US 201715407258
(71) Applicant: Aquatron Robotic Technology Ltd., 1811002 Afula (IL)
(72) Inventor: Attar, Benjamin, 27062 Kiryat Bialik (IL); Schloss, Shahar, 3499703 Haifa (IL)
(74) Representative: Pearl Cohen Zedek Latzer Baratz UK LLP

(57) **Abstract**

A method for remotely operating a robotic pool cleaner (10) includes providing a robotic pool cleaner comprising a propulsion drive (28,20,14) configured to propel the robotic pool cleaner along a surface of a pool; a controller (31) configured to communicate with a portable communication device (707), and control the propulsion drive in accordance with commands received from a the portable communication device; using the portable communication device, obtaining one or more characteristics of a surface of the pool; displaying a graphical representation of the pool on a display (706) of the portable communication device; receiving a user input from a user via an input interface (706) of the portable communication device; translating the user input into a command; and transmitting the command to a controller of the robotic pool cleaner, for execution by the robotic pool cleaner.

## Description

### FIELD OF THE INVENTION

The present invention relates to robotic pool cleaners. More particularly, the present invention relates to a method and a device for remotely controlling a robotic pool cleaner.

### BACKGROUND OF THE INVENTION

Robotic pool cleaners are well known in the art and have been used for many years. Such robotic pool cleaners typically comprise a hollow housing or body, a pump for drawing water into the housing from one or more inlets, usually located on the bottom of the housing, one or more filters for filtering the water and entrapping debris, one or more outlets for expelling the filtered water, and a drive for propelling the robot on the surface of the pool.

The pump in many cases is commonly an electric pump located within the housing of the pool cleaner, but may be external to the cleaner and connected to the housing by a flexible hose. The drive commonly comprises an electric motor within the housing of the pool cleaner. Some robotic pool cleaners are known to have a drive that employs a water jet type propulsion, the jet being produced by the efflux of the water pump. Although pool cleaners are commonly designed to operate in a random or preprogrammed fashion, some pool cleaners incorporate an external, manual control system, whereby a user can control the direction of travel of the pool cleaner, command the pool cleaner to turn in a selected direction, or turn the pool cleaner on or off. However, such controls usually provide limited functionality.

### SUMMARY OF THE INVENTION

There is thus provided, in accordance with an embodiment of the present invention, a method of remotely operating a robotic pool cleaner. The robotic pool cleaner may comprise a housing; a propulsion drive configured to propel the robotic pool cleaner along a surface of a pool; a pump for drawing liquid from the pool into the housing, so as to trap dirt and debris from the surface of the pool into a filter; a controller configured to communicate with a portable communication device, and control the propulsion drive in accordance with commands received from a the portable communication device. The method may include using the portable communication device, to obtain one or more characteristics of a surface of the pool; to display a graphical representation of the pool on a display of the portable communication device; to receive a user input from a user via an input interface of the portable communication device; to translate the user input into a command; and to transmit the command to a controller of the robotic pool cleaner, for execution by the robotic pool cleaner.

In some embodiments of the invention, obtaining one or more characteristics of a surface of the pool may include receiving data transmitted from the robotic pool cleaner or receiving data input via a user input interface of the portable communication device.

In some embodiments of the invention, the method may also include using the portable communication device, to display a current location of the pool cleaner in the pool on the graphical representation of the pool as displayed on the display.

In some embodiments, the user input may include indication of a desired target position in the pool for the pool cleaner to travel to.

In some embodiments, the user input may include indication of a particular path to be traveled by the pool cleaner.

According to some embodiments, the user input may include indication of a pattern of movement.

In some embodiments, the user input may include indication to maintain a position of the pool cleaner within or outside an indicated zone of the pool.

In some embodiments, the user input may be selected from the group of inputs consisting of tapping, sliding a finger, making a gesture, inputting text using a real or virtual keyboard, and providing a vocal command.

In some embodiments, the user input may include a homing instruction and wherein the command causes the pool cleaner to travel toward a current location of the user.

In some embodiments, the obtaining of said one or more characteristics of a surface of the pool may include recording movement of the user around a perimeter of the pool.

In some embodiments, the method may also include using a camera of the portable communication device for the user input.

In some embodiments, a computer readable medium may include instructions which when implemented in a processor of a portable communication device cause the device to execute any of the methods described herein.

There is also provided, according to some embodiments of the invention, a robotic pool cleaner. The robotic pool cleaner may include a housing; a propulsion drive configured to propel the robotic pool cleaner along a surface of a pool; a pump for drawing liquid from the pool into the housing, so as to trap dirt and debris from the surface of the pool into a filter; a controller configured to communicate with a portable communication device, and control the propulsion drive in accordance with commands received from a the portable communication device. The controller may be further configured to receive, and cause the robotic pool cleaner to execute, a command from a portable communication device that has obtained one or more characteristics of a surface of the pool; displayed a graphical representation of the pool on a display of the portable communication device; received a user input from a user via an input interface of the portable communication device; translated the user input into a command; and transmitted the command to a controller of the robotic pool cleaner, for execution by the robotic pool cleaner.

There is also provided, according to some embodiments of the invention, a robotic pool cleaning system including: a robotic pool cleaner comprising a housing; a propulsion drive configured to propel the robotic pool cleaner along a surface of a pool; a pump for drawing liquid from the pool into the housing, so as to trap dirt and debris from the surface of the pool into a filter; and a controller configured to communicate with a portable communication device, and control the propulsion drive in accordance with commands received from a portable communication device; and a portable communication device configured to implement any of the methods described herein.

### BRIEF DESCRIPTION OF THE DRAWINGS

In order for the present invention, to be better understood and for its practical applications to be appreciated, the following Figures are provided and referenced hereafter. It should be noted that the Figures are given as examples only and in no way limit the scope of the invention. Like components are denoted by like reference numerals.
Fig. 1A schematically illustrates a robotic pool cleaner, in accordance with an embodiment of the present invention.
Fig. 1B schematically illustrates a bottom side of the robotic pool cleaner shown in Fig. 1A.
Fig. 2 is a flowchart depicting a method of navigation of a robotic pool cleaner, in accordance with an embodiment of the present invention.
Fig. 3A schematically illustrates measurement of dimensions of a rectangular pool during execution of the navigation method depicted by the flowchart in Fig. 2.
Fig. 3B schematically illustrates mapping a perimeter of a rectangular pool during execution of the navigation method depicted by the flowchart in Fig. 2.
Fig. 3C schematically illustrates designation or a reference point as determination of a location of an obstacle relative to the reference point during execution of the navigation method depicted by the flowchart in Fig. 2.
Fig. 3D schematically illustrates detection of an obstacle in a corner during execution of the navigation method depicted by the flowchart in Fig. 2.
Fig. 4 schematically illustrates selection of a direction of travel after encountering a curved wall during execution of the navigation method depicted by the flowchart in Fig. 2.
Fig. 5 is a flowchart depicting a method of navigating a robotic pool cleaner while ascending or descending a wall, in accordance with an embodiment of the present invention.
Fig. 6 schematically illustrates a robotic pool cleaner that is executing the method shown in Fig. 5.
Fig. 7 illustrates a robotic pool cleaner, remotely controlled by a hand-held portable communication device (e.g., a smartphone), according to some embodiments of the present invention.
Fig. 8 illustrates method and device for remotely controlling a robotic pool cleaner according to some embodiments of the present invention.
Fig. 9 illustrates a smartphone with GUI of a control application for a pool cleaner, and a cooperating smart-watch, according to some embodiments of the present invention.
Fig. 10 illustrates a smartphone with GUI of a control application for a pool cleaner, according to some embodiments of the present invention.
Fig. 11 illustrates a method for remotely operating a robotic pool cleaner, according to some embodiments of the present invention.

### DETAILED DESCRIPTION OF THE INVENTION

In the following detailed description, numerous specific details are set forth in order to provide a thorough understanding of the invention. However, it will be understood by those of ordinary skill in the art that the invention may be practiced without these specific details. In other instances, well-known methods, procedures, components, modules, units and/or circuits have not been described in detail so as not to obscure the invention.

Although some embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, hardware circuitry, or other electronic computing device, that manipulates and/or transforms data represented as physical (e.g., electronic) quantities within the computer's registers and/or memories into other data similarly represented as physical quantities within the computer's registers and/or memories or other information non-transitory storage medium (e.g., a memory) that may store instructions to cause a processor or processors to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed simultaneously, at the same point in time, or concurrently. Unless otherwise indicated, the conjunction "or" as used herein is to be understood as inclusive (any or all of the stated options).

Some embodiments of the invention may include an article such as a computer or processor readable medium, or a computer or processor non-transitory storage medium, such as for example a memory, a disk drive, or a USB flash memory, encoding, including or storing instructions, e.g., computer-executable instructions, which when executed by a processor or controller, carry out methods disclosed herein.

As used herein, a pool may refer to a swimming pool, or another type of pool or tank that is configured to be filled with a liquid such as water. The pool surface refers to surfaces of the pool that the robotic pool cleaner is configured to clean. For example, where the robotic pool cleaner is configured to clean the floor or bottom of the pool, the pool surface refers only to the floor. Where the robotic pool cleaner is also configured to clean all or part of substantially vertical or steeply sloped walls of the pool, the pool surface refers also to those parts of the wall that are to be cleaned.

As used herein, a sensed feature of travel refers to sensed motion of the robotic pool cleaner or of a part of a propulsion system of the robotic pool cleaner during motion of the robotic pool cleaner, a sensed position or orientation of robotic pool cleaner, monitored power that is provided to a motor of the propulsion system, a sensed distance from an object during travel, or another feature that is related to travel or navigation of the robotic pool cleaner.

As used herein, a characteristic of the pool surface that is to be assessed refers to a characteristic that is derivable from a sensed feature of travel of the robotic pool cleaner and that is expected to remain constant, at least during a single session during which the robotic pool cleaner is operating to clean the pool. For example, characteristics to be assessed may include dimensions of the pool, a shape of the pool, traction (e.g., limits of traction) of the robotic pool cleaner on the pool surface, a slope of a pool bottom, a location, size, or shape of an obstacle that impedes or otherwise affects motion of the robotic pool cleaner, or another similar constant characteristic. In particular, a feature or object that is detectable primarily by imaging the pool surface and that does not affect movement of the robotic pool cleaner (e.g., the presence of dirt, debris, discoloration, or similar features) is not considered herein to be included among assessed characteristics of the pool surface.

A parameter of operation refers to a parameter that a controller of the robotic pool cleaner utilizes when operating the pool cleaner to clean the pool. For example, a parameter may include a length of time, a maximum speed, a direction of travel, power that is applied to a propulsion motor of suction pump, a rate of outflow from an outflow port, or another parameter of operation.

For example, assessed pool characteristics may include dimensions of the pool. The robotic pool cleaner may be configured to travel along a path in such a manner that monitoring of the motion reveals one or more dimensions of the pool.

When traveling within the pool during assessment of a characteristic of the pool or pool surface, the robotic pool cleaner (e.g., a controller of the robotic pool cleaner) may monitor motion of the robotic pool cleaner. For example, a distance of motion or displacement may be measured directly (e.g., optically detected motion along a pool surface), or may be measured indirectly (e.g., by measuring rotation of a wheel or track of the robotic pool cleaner, of a part of a transmission, or of a propulsion motor of the robotic pool cleaner). A turning angle or rate of turning may be measured by, or derived from measurements by, a compass, gyroscope, accelerometers (e.g., displaced from an axis of turning of the robotic pool cleaner), or other device. A proximity to a surface (e.g., a wall or obstacle) may be measured by a rangefinder or proximity sensor. A slope may be measured by a tilt sensor, or other suitable sensor. In some cases, a depth below the water surface may be derived by measurements by a pressure gauge, or may be measured directly by a sensor that measures a distance to the water surface. The robotic pool cleaner may be configured to operate a propulsion motor or suction pump, e.g., at predetermined intervals, in response to a sensed condition, or otherwise, to assess a characteristic related to dynamic operation of the robotic pool cleaner. For example, the robotic pool cleaner may be configured to increase the speed of rotation of its wheels until slipping is detected (e.g., by comparing a speed of rotation with electrical power consumption of the propulsion motor, or otherwise).

During traveling, the robotic pool cleaner may monitor its displacement (e.g., distance traveled and direction of travel) during each of a plurality of segments of the route traveled. For example, a segment may be considered to include all travel along a substantially straight line (e.g., with no turning detected). Alternatively or in addition, motion along a straight line may be divided into segments (e.g., at predetermined time intervals, or otherwise). The robotic pool cleaner may then be configured to calculate its current position by vector addition of the displacements during the various segments. A location of zero displacement may be defined by a user of the robotic pool cleaner (e.g., by operation of a control), may be determined by an event (e.g., beginning of operation, an encounter with a wall, or other event), or otherwise.

For example, in the simple case of a pool with a rectangular shape, the robotic pool cleaner may be configured to, upon first encountering a wall of the pool, to travel away from the wall in a direction that is substantially perpendicular to the wall. (An encounter with the wall may be detected by applying one or more techniques known in the art. Such techniques include using a proximity or contact sensor to sense the presence of the wall, detecting an inability to continue forward motion, or another technique.) The perpendicular travel may continue until encountering an opposite wall. During travel along the perpendicular path, the robotic pool cleaner may monitor the distance traveled. For example, the robotic pool cleaner may measure a total rotation angle, or count a total number of rotations of, of a propelling wheel or of a rotating part of a transmission for transmission of power from a motor to a propelling wheel, track, or other propulsion mechanism. A speed of travel may be monitored, e.g., by monitoring a speed of rotation of a wheel or other component of a motor, transmission, or propulsion mechanism, or measured directly by measuring a speed of flow of water in the pool relative to the robotic pool cleaner, and a time of travel. A distance may be measured with reference to one or more local (e.g., relative to one or more local beacons, reference devices, landmarks, or other reference points), regional, or global guidance systems (e.g., such as the Global Positioning System (GPS) or another satellite based system - hereinafter referred to, for brevity, as "GPS"). A distance may be measured monitoring relative movement to features or texture of the pool surface or to markings on the pool surface (e.g., similar to operation of an optical mouse). After encountering the opposite wall, the robotic pool cleaner may travel in a direction that is perpendicular to the direction between the first two walls in order to similarly measure the distance between the two other walls of the rectangular pool.

As another example, the robotic pool cleaner may be configured to travel along the perimeter of the pool. For example, the robotic pool cleaner may include a sensor that senses a distance of the robotic pool cleaner from the nearest wall of the pool. For example, the distance sensor may include a proximity sensor or a rangefinder. The robotic pool cleaner may start to travel parallel to the wall at a predetermined distance (e.g., less than one meter, in some cases, less than 10 centimeters) from the wall. The robotic pool cleaner may control its motion (e.g., steer right or left) so as to maintain a substantially constant distance from the wall. While traveling along the pool wall, the robotic pool cleaner may monitor the distance travelled. In addition, the robotic pool cleaner may include one or more sensors that may be operated to sense an angle of a turn, or a rate of turning. Such sensors may include, for example, a compass or magnetometer, a gyroscope, an accelerometer (e.g., that is displaced from an axis of rotation), or another sensor. Thus, the robotic pool cleaner may utilize some or all of the sensed motions to construct a map of the perimeter of the pool. Traveling along the perimeter may enable determining dimensions of the pool when the pool is nonrectangular (e.g., polygonal, round, oval, kidney shaped, or otherwise shaped). In some cases, after using the determined perimeter to calculate an operating time, the perimeter may be stored for later reference. For example, the determined perimeter may be utilized during selection of a direction of travel after encountering a wall.

The robotic pool cleaner may calculate the value of an operation parameter in the form of operating time in accordance with the measured dimensions. An operating time for the robotic pool cleaner may be selected such that operation of the robotic pool cleaner enables cleaning of all parts of the pool surfaces. (As used herein, pool surfaces refer to the floor and walls of the pool.) For example, calculation of an operating time may be based on one or more of the area of the pool surfaces, a rate at which the robotic pool cleaner cleans the pool surfaces, a pattern of travel of the pool surfaces, or other assessed characteristics. A calculated operating time may also take into consideration other factors (e.g., that are input by an operator). Such factors may include, for example, usage of the pool (e.g., number of people who use the pool, their ages, whether the pool is covered when not in use, or other factors related to usage), time elapsed since a previous cleaning, environmental factors (e.g., prevalence of dust in the air, nearby vegetation, winds, precipitation, or other environmental factors), or other considerations.

For example, an algorithm may calculate operating time as proportional to area of the pool, regardless of shape (a proportionality constant may be fixed for all circumstances, or may be selectable in accordance with one or more other factors or considerations). For example, the area may be calculated using a formula for a simple regular shape, or may be calculated by numerical integration for a complex or irregular shape. An algorithm may take into account a shape of the pool (e.g., variations in a motion pattern as appropriate for a particular shape), or other factors.

Determination of a pool characteristic may enable selection of a travel path for the robotic pool cleaner on the basis of the shape or contour of the wall. For example, when the robotic pool cleaner encounters a wall during cleaning, the pool cleaner may climb the wall to the water surface (e.g., at an angle to the vertical). When the robotic pool cleaner reaches the water surface, the robotic pool cleaner may descend the wall along a path that is laterally (e.g., horizontally displaced) from the path of the robotic pool cleaner when climbing the wall. When the pool is rectangular and upon descending along the wall to the bottom of the pool, the robotic pool cleaner may travel away from the wall along the floor of the pool in a direction that is perpendicular to the wall. Alternatively or in addition, upon encountering a wall while traveling along the floor of the pool, the robotic pool cleaner may be configured to travel a short distance away from the wall at a predetermined angle (e.g., 45° or another angle) until the robotic pool cleaner is laterally displaced by a predetermined distance (e.g., parallel to the wall). The robotic pool cleaner may then turn and travel away from the wall in a direction that is substantially perpendicular to the wall.

When the pool is nonrectangular, the direction of departure from the wall may be selected on the basis of a curvature or other property of the wall at the point of departure, and may not necessarily be perpendicular to the wall. For example, the direction of departure may be advantageously selected in a manner that enables efficient coverage of the pool surfaces by the robotic pool cleaner.

An assessed pool characteristic may include a slope of the floor of the pool. When traveling in the pool, the robotic pool cleaner may map a slope of the floor of the pool. For example, when traveling within the pool, one or more tilt sensors may be operated to detect a local slope of the pool floor (e.g., an angular deviation of the pool floor from the horizontal), a direction or orientation of the slope, or another or related quantity that defines a slope.

The assessed local slope may be utilized to determine an amount of power that is to be provided to a propulsion motor of the robotic pool cleaner. For example, traveling upslope, or turning to travel in an upslope direction, may require more propulsion power than travelling, or turning to travel, along a level floor or downslope.

An assessed pool characteristic may include a surface characteristic of the pool surfaces. For example, the robotic pool cleaner may be configured to measure a maximum static friction force between the wheels of the robotic pool cleaner and the pool surface. Similarly, the robotic pool cleaner may be configured to measure the maximum speed of rotation of a propulsion wheel (to be understood herein as including a wheel, tire, track, or other surface or structure that is rotated by rotation of a propulsion wheel). A measured maximum static friction force may be analyzed to yield a coefficient of friction between the wheels and the pool surface, or another similar or equivalent characteristic of the pool surface.

For example, a motor of the robotic pool cleaner may be configured to enable measurement of a rotational speed of the motor. For example, if the motor is a direct current electric motor of the brushless type, the motor may be driven by a pulse width modulated signal and provide feedback regarding the rotational speed. Alternatively, a brush type motor may be provided with a suitable speed sensor. A motor controller of the robotic pool cleaner may thus obtain the rotational speed of the motor. The motor controller is configured to provide a controllable level of electric power to the motor. Thus, the motor controller or a processor may monitor the electric power that is required to maintain a particular speed. As long as the load on the motor is constant (e.g., when the wheel surface is held to the pool surface by static friction), the speed of rotation increases approximately linearly with the electric power. However, when the wheels of the robotic pool cleaner begin to slip relative to the pool surface, the rotational speed may suddenly increase, or may increase at a rate that is nonlinear with respect to the applied power. Furthermore, when the wheels are slipping, the robotic pool cleaner may no longer travel in the direction of rotation of the wheels. Measurement of the ratio of increase in rotational speed and the increase in electric power to the motor may thus enable detection of the wheel rotation speed at which static friction is overcome. Further analysis may yield a coefficient of friction, or other another characteristic of the pool surface.

Information regarding the pool surface characteristics may be utilized to control operating parameters of the suction pump and motor. For example, when slipping may be of concern during operation of the robotic pool cleaner, the suction that is provided by the suction pump may be increased to provide increased traction. As another example, the speed of rotation of the wheels may be controlled to be sufficiently slow so as to prevent slipping (e.g., to enable accurate tracking of a distance travelled), or a period of time of an operation (e.g., operation at or near the water surface) may be adjusted to prevent uncontrolled slipping or other motion. Situations that may require adjustment of operating parameters may include turning and climbing walls.

A robotic pool cleaner may be configured to designate a reference point within the pool. The robotic pool cleaner may then be commanded at a later time to directly return to the reference point.

For example, the reference point may be designated to be a point at which the robotic pool cleaner is first placed on a pool surface, or at which the robotic pool cleaner is activated or begins operation after placement on the pool surface. In some cases, the reference point may be designated after the robotic pool cleaner has determined one or more pool characteristics. Alternatively or in addition, the reference point may be designated by an operator of the robotic pool cleaner (e.g., by operation of a control) when the robotic pool cleaner is at a location that the operator wishes to designate as a reference point. For example, the operator may wish to designate a point in the pool at which access to the robotic pool cleaner is convenient (e.g., at the shallow end of the pool, or near a stairway or ladder in the pool).

After designation of the reference point, the robotic pool cleaner may then monitor its subsequent motion so as to continually calculate its current position relative to the reference point as it travels over the pool surfaces. For example, the robotic pool cleaner may be configured, e.g., when the robotic pool cleaner is travelling in a straight line, to monitor its speed of travel and the time elapsed during travel. The speed of travel in a single (straight line) direction may be derived from a measured rotation of a motor, transmission, or wheel. Alternatively or in addition, the speed of travel relative to a pool surface may be measured directly using an appropriate sensor (e.g., an optical or acoustic sensor). When turning, the angle of a turn may be detected using a compass, gyroscope, or other orientation-sensitive sensor. Alternatively or in addition, the robotic pool cleaner may be configured to continually monitor a displacement from the reference point (e.g., in additional to absolute orientation, e.g., as measured by a compass). For example, an optical sensor may be configured to continually measure displacement (e.g., in a manner similar to operation of an optical mouse).

Thus, the robotic pool cleaner may be configured to directly return (e.g., along the shortest route, e.g., a straight line in a pool where all walls are either flat or convex) to the reference point upon generation of a command to do so. For example, the command may be generated automatically by a controller of the robotic pool cleaner when cleaning of the pool is complete (e.g., after a time of operation that is based on pool dimensions, or otherwise) or when servicing or attention by an operator of the robotic pool cleaner is required. Alternatively or in addition, the command may be generated by the operator of the robotic pool cleaner. Directly returning to the reference point may facilitate extraction of the robotic pool cleaner from the pool upon completion of cleaning or for servicing. For example, the reference point may be at a point of the pool where there is convenient access to the robotic pool cleaner by an operator who is located outside of the pool (e.g., at a shallow end of the pool).

In some cases, two or more reference points may be designated. The robotic pool cleaner may be configured to continuously monitor its position relative to each of the reference points. The robotic pool cleaner may be commanded to return to any one of the designated reference points.

The reference point may also enable identifying a location of an obstacle or of another location where operation of the robotic pool cleaner is anomalous or deviates from expected operation (e.g., as caused by a local property or anomaly of the pool surface, or by another location-related deviation). Thus, during future operation, travel of the robotic pool cleaner may be controlled so as to avoid the identified location, or operation of the robotic pool cleaner may be modified when at that location so as to avoid causing the anomalous behavior.

For example, an obstacle (e.g., a raised drain or another obstacle) may be detected and its location relative to the reference point may be recorded. An obstacle herein refers to an object or structure (other than a wall of the pool) that impedes travel of the robotic pool cleaner. For example, the obstacle may be located near a corner of the pool. When the robotic pool cleaner encounters the corner, the robotic pool cleaner may attempt to turn. However, the presence of the obstacle may prevent or impede the turning of the robotic pool cleaner. An actual rate of turning may be detected by operation of a compass or gyroscope. A deviation of the actual rate of turning from an expected rate of turning may be indicative of an obstacle.

A robotic pool cleaner may be configured to monitor its orientation when climbing or descending a wall of the pool. The monitored orientation may be utilized to enable continued operation after falling or slipping from a wall. The monitored orientation may be used to detect the beginning of a fall. An automatic learning algorithm may utilized monitored information regarding function of the robotic pool cleaner prior to the detected fall (e.g., motor speed, suction pump operation, or other parameters) to determine the circumstances that led to the falling. The robotic pool cleaner may, as a result, be controlled to operate differently the next time a wall is climbed or descended in order to prevent, or attempt to prevent, falling. In some cases, when the beginning of a fall is detected, the suction pump, propulsion motor, or other controllable unit of the robotic pool cleaner may be operated so as to halt or moderate the falling (e.g., by forcing the robotic pool cleaner back toward the wall).

For example, measuring the orientation of the robotic pool cleaner may include one or more of measuring a current orientation of the robotic pool cleaner (e.g., using one or more compasses, gyroscopes, tilt sensors, or other orientation measuring devices), measuring a change or rate of change of an orientation (e.g., using a gyroscope, accelerometer, or other device for measuring a rate of change of an orientation)

Navigation of a robotic pool cleaner as described herein may be advantageous over other methods of navigation, where data obtained from sensors is used to direct movement of the pool cleaner according to preset algorithms. As described herein, operation of the robotic pool cleaner may be optimized to a specific shape or size of the pool, and surface traction. Thus, a length of an operating cycle time may be based on the size of the pool, or to account for the differing traction and adherence to various pool surfaces or inclination. These characteristics may be determined automatically and autonomously by the robotic pool cleaner, without any need for an operator to pre-select such parameters. Motion of the robotic pool cleaner may be monitored to accurately monitor its position at all times and to enable the robotic pool cleaner to return to a preset reference point.

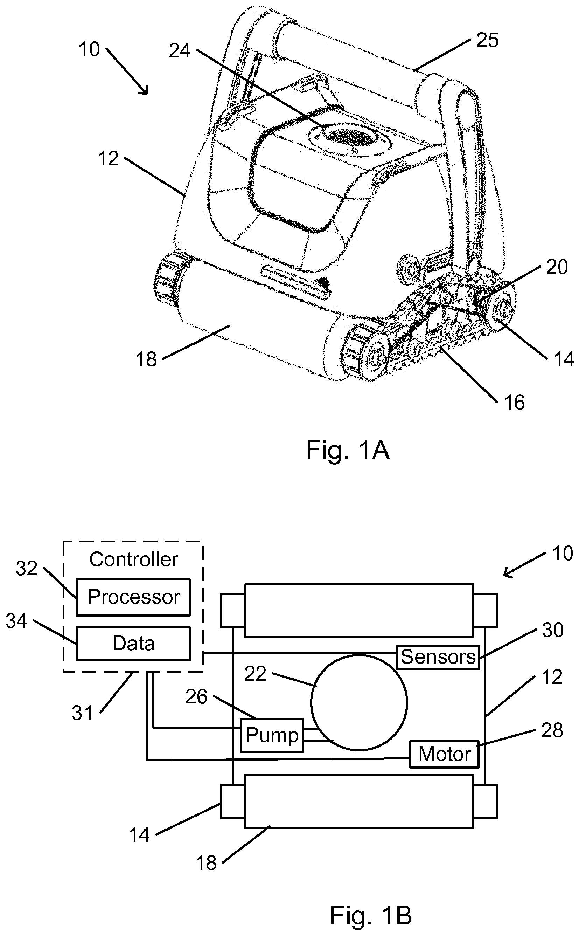

Fig. 1A schematically illustrates a robotic pool cleaner, in accordance with an embodiment of the present invention. Fig. 1B schematically illustrates a bottom side of the robotic pool cleaner shown in Fig. 1A.

Robotic pool cleaner 10 is configured to autonomously clean a liquid-filled pool, such as a water-filled swimming pool. Cleaner body 12 of robotic pool cleaner 10 may house internal components of robotic pool cleaner 10, and may serve as a surface to which exterior components of robotic pool cleaner 10 are mounted.

A locomotion system of robotic pool cleaner 10 may include one or more motors 28. Motor 28 may be housed inside cleaner body 12 and may drive locomotion wheels 14 via transmission 20. Transmission 20 may include one or more shafts, gears, belts, pulleys, levers, or other transmission components. Locomotion wheels 14 may be provided with tracks 16, or other traction-increasing surfaces or components (e.g., tires, suction cups, rubber or adhesive surfaces, or other types of components or surfaces). In some cases, transmission 20 may be controlled so as to rotate locomotion wheels 14 on different sides of robotic pool cleaner 10 at different rates, e.g., so as to turn robotic pool cleaner 10. In some cases, different locomotion wheels 14 of robotic pool cleaner 10 (e.g., on different sides of robotic pool cleaner 10) may be operated by different, separately controllable, motors 28. In some cases, motor 28 may propel robotic pool cleaner 10 by rotating a propeller, operating a fin or paddle, or by otherwise creating a fluid jet or propelling robotic pool cleaner 10.

A cleaning brush 18 may rotate together with, or separate from (e.g., by a mechanism that is separate from the mechanism for rotating) locomotion wheels 14. Cleaning brush 18 may loosen dirt or debris that adheres to the pool surface, to enable the dirt and debris to be lifted into robotic pool cleaner 10 by a suction system of robotic pool cleaner 10.

A suction system of robotic pool cleaner 10 may include a suction pump 26. For example, suction pump 26 may employ a rotating screw or propeller mechanism to suck liquid from the pool into intake port 22 on the bottom surface of robotic pool cleaner 10. As used herein, the bottom or bottom surface of robotic pool cleaner 10 refers to the side or surface of robotic pool cleaner 10 or of cleaner body 12 that faces a pool surface when being operated to clean that pool surface. The liquid that enters intake port 22 may pass through a filter or trap that is configured to trap dirt or debris that flows into intake port 22 together with the inflowing liquid. The liquid may then be expelled via outflow port 24. For example, outflow port 24 may be located on an upper surface of robotic pool cleaner 10.

Electrical power for operating one or both of motor 28 and suction pump 26, may be provided by an internal power source (e.g., by a storage battery or other internal or onboard source) that is housed in cleaner body 12. Alternatively or in addition, electrical power may be provided by a power source that is external to cleaner body 12. For example, the external power source may be connected by a cable to robotic pool cleaner 10. For example, the external power source may be located outside of the pool, or may be configured to float on the water surface.

In some cases, a single motor 28 may drive both suction pump 26 and locomotion wheels 14. For example, motor 28 may be linked to locomotion wheels 14 and to suction pump 26 by different transmissions. In some cases, the different transmissions may be operated independently of one another such that operation of locomotion wheels 14 may be independent of operation of suction pump 26. In some cases, operation of locomotion wheels 14 and of suction pump 26 may be linked. In some cases, suction pump 26 may be driven by a motor that is separate from motor 28.

Operation of motor 28 and suction pump 26 may be controlled by controller 31. Controller 31 may include one or more components. Some or all components of controller 31 may be located on robotic pool cleaner 10. Alternatively or in addition, some or all components of controller 31 of robotic pool cleaner 10 may be located on an external unit, e.g., housed together with an external power supply. When external to robotic pool cleaner 10, controller 31 may communicate with components of robotic pool cleaner 10 via a cable.

For example, controller 31 may include a processor 32. Processor 22 may include one or more processing units that are configured to operate in accordance with programmed instructions.

Data storage 34 may include one or more fixed or removable, volatile or nonvolatile, memory or data storage units. Data storage 34 may be utilized, for example, to store programmed instructions for operation of processor 32, data or parameters for utilization by processor 32 (e.g., as entered by an operator of robotic pool cleaner 10, as obtained by sensors 30, or as obtained from another source, such as a navigation or external system with which controller 31 is in communication), or results of a calculation or operation of processor 32.

Controller 31 may receive sensed data from sensors 30. Sensors 30 may include one or more sensors that are located on robotic pool cleaner 10, or external to robotic pool cleaner 10. Sensors 30 may include one or more sensors that enable monitoring movement of robotic pool cleaner 10. For example, sensors 30 may include an encoder or rotation sensor that measures a rotation angle or a rotation rate of one or more rotatable components of motor 28, transmission 20, locomotion wheels 14, or suction pump 26. Sensors 30 may include one or more sensors that are configured to measure an orientation, or a rate of change of orientation, of robotic pool cleaner 10. For example, such orientation-related sensors may include one or more magnetic compasses, gyroscopes, tilt sensors, accelerometers, light sensors, or other sensors configured to sense a characteristic related to orientation of robotic pool cleaner 10. Sensors 30 may include one or more proximity sensors or rangefinders that enable sensing of a distance from a surface, such as a pool surface. Such distance sensors may be based on optical, acoustic, electromagnetic, mechanical, or other appropriate mechanism. Sensors 30 may include a pressure sensor or other sensor for measuring a depth of robotic pool cleaner 10 below a water surface of the pool. Sensors 30 may include a flow sensor for measuring a flow rate of liquid, e.g., in the suction system or relative the water in the pool. Sensors 30 may include a force or torque sensor to measure a force or torque that is exerted on locomotion wheels 14. In some cases, some or all of sensors 30 may be incorporated into a single inertial navigation unit or another integrated unit.

Controller 31 may be configured to control and monitor operation of motor 28 and suction pump 26. For example, processor 32 of controller 31 may operate in accordance with programmed instructions to execute a method for navigation of robotic pool cleaner 10.

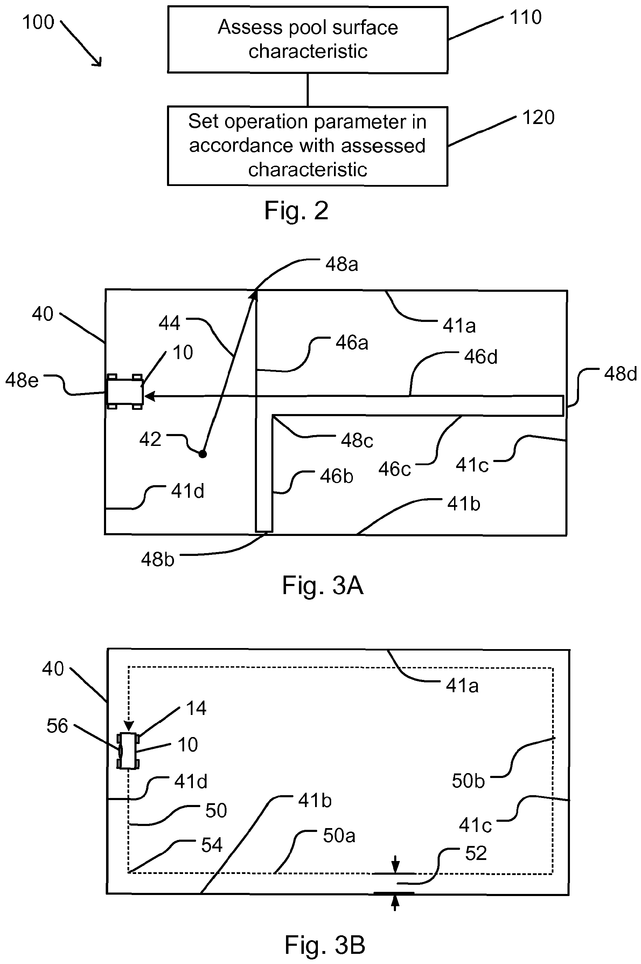

Fig. 2 is a flowchart depicting a method of navigation of a robotic pool cleaner, in accordance with an embodiment of the present invention.

It should be understood with respect to any flowchart referenced herein that the division of the illustrated method into discrete operations represented by blocks of the flowchart has been selected for convenience and clarity only. Alternative division of the illustrated method into discrete operations is possible with equivalent results. Such alternative division of the illustrated method into discrete operations should be understood as representing other embodiments of the illustrated method.

Similarly, it should be understood that, unless indicated otherwise, the illustrated order of execution of the operations represented by blocks of any flowchart referenced herein has been selected for convenience and clarity only. Operations of the illustrated method may be executed in an alternative order, or concurrently, with equivalent results. Such reordering of operations of the illustrated method should be understood as representing other embodiments of the illustrated method.

Pool cleaner navigation method 100 may be executed by processor 32 of controller 31 of robotic pool cleaner 10. For example, execution of pool cleaner navigation method 100 may commence automatically prior to cleaning a pool. For example, execution of pool cleaner navigation method 100 may begin when robotic pool cleaner 10 is activated and resting on the floor of the pool in an upright orientation (e.g., when the bottom of robotic pool cleaner 10 that includes intake port 22 is facing the floor of the pool). Alternatively or in addition, execution of pool cleaner navigation method 100 may commence upon receiving a command (e.g., entered via a control on robotic pool cleaner 10, on a separate unit that is connected to robotic pool cleaner 10, or via a remote device that is in communication with robotic pool cleaner 10 or the separate unit) from an operator of robotic pool cleaner 10. For example, an outer surface of cleaner body 12 or of handle 25 may include one or more user-operable controls. The controls (e.g., pushbuttons or switches, pressure sensitive surfaces, optically, thermally, or electromagnetically operated controls, or other suitable controls) may be made waterproof or may be covered by a waterproof cover that is sufficiently flexible or transparent to enable access to the controls. The controls may include a corresponding display screen or control panel.

One or more pool surface characteristics may be measured (block 110). For example, pool surface characteristics may include a size of the pool, a shape of the perimeter of the pool, location of obstacles on the floor of the pool, traction-related characteristics of the pool surface, or another characteristic whose measured value may affect a parameter of operation of robotic pool cleaner 10.

For example, a size of the pool may be indicative of an operation time of robotic pool cleaner 10 in the pool to effectively clean the pool. A shape of the pool may be indicative of direction of travel of robotic pool cleaner 10 in order to efficiently clean the pool surfaces. A location of an obstacle may be utilized to control motion of robotic pool cleaner 10 to avoid the obstacle or to modify a direction of travel so as to effectively disengage after encountering the obstacle. A traction-related characteristic may be indicative of a manner or locomotion (e.g., maximum speed, minimum normal force, or other parameter) of robotic pool cleaner 10 that may avoid slipping.

For example, movement of robotic pool cleaner 10 may be monitored while travelling on the floor of the pool in order to measure a surface characteristic in the form of a size, shape, or both of a pool.

Fig. 3A schematically illustrates measurement of dimensions of a rectangular pool during execution of the navigation method depicted by the flowchart in Fig. 2.

A size of rectangular pool 40 may be characterized by a length and width. In some cases, robotic pool cleaner 10 may be configured in a default mode that assumes a rectangular pool 40. In some cases, an operator of robotic pool cleaner 10 may operate a control to indicate that a pool to be cleaned is a rectangular pool 40.

When beginning to measure a size of rectangular pool 40, robotic pool cleaner 10 may be located at starting point 42. For example, starting point 42 may represent a location at which robotic pool cleaner 10 is placed in rectangular pool 40, or a location of robotic pool cleaner 10 when execution of pool cleaner navigation method 100 is initiated (e.g., in response to a command that is generated by controller 31 or by an operator of robotic pool cleaner 10).

Robotic pool cleaner 10 may begin to travel along initial path 44 until encountering pool wall 41a at point 48a. The direction of initial path 44 may be arbitrary. One or more sensors may detect the encounter of robotic pool cleaner 10 with pool wall 41a at point 48a. For example, the encounter with pool wall 41a at point 48a may be detected by a proximity sensor, may be detected by an accelerometer, may be detected via resistance to operation of motor 28, or may be detected otherwise.

Upon encountering pool wall 41a at point 48a, robotic pool cleaner 10 may be configured to depart from pool wall 41a along path segment 46a in a direction that is perpendicular to pool wall 41a. For example, two or more laterally displaced distance sensors may indicate an orientation of robotic pool cleaner 10 relative to pool wall 41a at point 48a. Controller 31 may then be configured to cause robotic pool cleaner 10 to reverse its direction of travel to depart from pool wall 41a while turning to a direction of travel that is perpendicular to pool wall 41a.

Alternatively or in addition, an operator may place robotic pool cleaner 10 in rectangular pool 40 while oriented such that initial path 44 is approximately perpendicular to pool wall 41a. Thus, after encountering pool wall 41a, robotic pool cleaner 10 may simply reverse its direction of travel to travel along path segment 46a.

Robotic pool cleaner 10 may travel along path segment 46a until encountering pool wall 41b at point 48b. During travel along path segment 46a, travel of robotic pool cleaner 10 may be monitored. For example, rotation of one or more of locomotion wheels 14 may be monitored to determine a total angle of rotation, a rate of rotation and a time of rotation (which may be multiplied or integrated to yield a total angle of rotation), or a total number of rotations of propulsion wheel 14. The measured rotation angle while traveling along path segment 46a is proportional to a length of path segment 46a, and thus a perpendicular distance between pool wall 41a and pool wall 41b (as shown in Fig. 3A, representing the width of rectangular pool 40). It may be noted that the distance between pool wall 41a and pool wall 41b may be expressed in the form of a total angle of rotation, or may be multiplied by a conversion constant, e.g., a radius of propulsion wheel 14, to yield a length in other units, e.g., standard units of length.

After encountering pool wall 41b at point 48b, robotic pool cleaner 10 may depart from pool wall 41b along path segment 46b, perpendicular to pool wall 41b. After travelling a predetermined fraction of the distance between pool wall 41b and pool wall 41a to point 48c, robotic pool cleaner 10 may turn by 90° to travel along path segment 46c. Robotic pool cleaner 10 may travel along path segment 46c until encountering pool wall 41c at point 48d. At point 48d, robotic pool cleaner 10 may reverse its direction of travel to travel along path segment 46d. Robotic pool cleaner 10 may travel along path segment 46a, monitoring the rotation of locomotion wheels 14, until encountering pool wall 41d at point 48e. The total rotation of locomotion wheels 14 while travelling along path segment 46d is proportional to the distance between pool wall 41c and pool wall 41d (as shown in Fig. 3A, representing the length of rectangular pool 40).

Thus, robotic pool cleaner 10 may measure a length and width of rectangular pool 40.

In some cases, e.g., during travel along path segment 46a or path segment 46d, or when encountering pool walls 41a-41d, or at other times, one or more sensors 30 of robotic pool cleaner 10 may measure the depth of rectangular pool 40 at different points. For example, a reading from sensor 30 in the form of pressure sensor may be indicative of a depth below the water surface, or a distance sensor may be configured to measure a distance to the water surface. The depth of the pool may indicate a height of pool walls 41a-41d.

In some cases, robotic pool cleaner 10 may be configured to measure a surface characteristic in the form of a map of a perimeter of a pool, such as rectangular pool 40.

Fig. 3B schematically illustrates mapping a perimeter of a rectangular pool during execution of the navigation method depicted by the flowchart in Fig. 2.

Although Fig. 3B illustrates mapping a perimeter of a rectangular pool 40, mapping of a polygonal, oval, curved, or irregularly shaped pool may be performed in an identical manner.

Sensors 30 of robotic pool cleaner 10 may include distance sensor 56. For example, distance sensor 56 may include a proximity sensor, a rangefinder sensor, or another sensor that may be used to measure a distance from a pool wall 41a-41d. Distance sensor 56 may operate using a proximity- or distance-sensor technology (e.g., optical, acoustic, electromagnetic, mechanical, or other technology) known in the art.

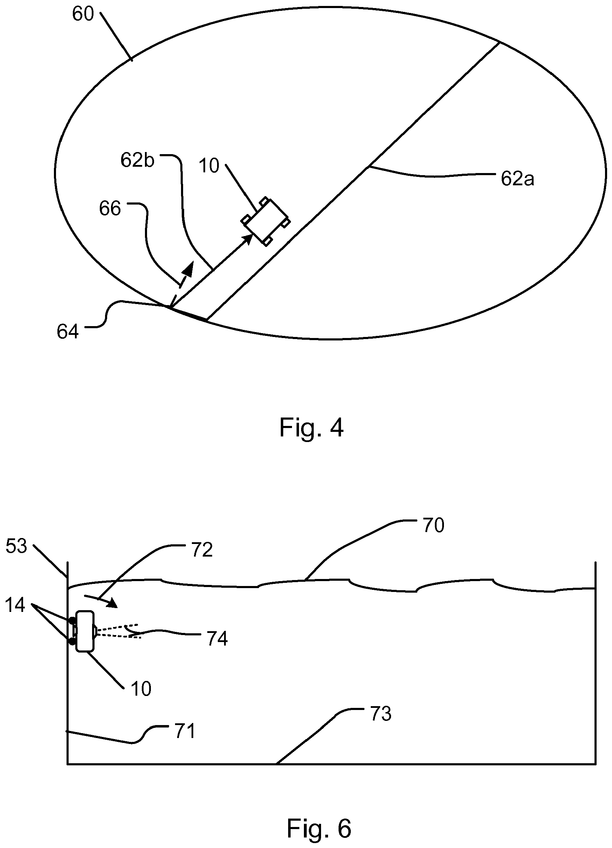

Controller 31 may be configured to control robotic pool cleaner 10 to travel along perimeter route 50 parallel to pool walls 41a-41-d at an approximately constant distance 52 from the nearest pool wall 41a-41d, as measured by distance sensor 56. For example, when the pool wall is curved (as in pool 60 in Fig. 4) or has an indented or concave section, controller 31 may be configured to constantly turn robotic pool cleaner 10 so as to remain at constant distance 52 from the wall of the pool. When robotic pool cleaner 10 encounters a corner 54 (e.g., as detected by a wall that blocks further forward travel), controller 31 may control robotic pool cleaner 10 to turn so as to travel parallel to the encountered wall. For example, when traveling along perimeter route 50 parallel to pool wall 41d toward pool wall 41b, upon encountering pool wall 41b at corner 54, robotic pool cleaner 10 may turn (left, in the example shown) to travel along perimeter route 50 parallel to pool wall 41b.

When traveling along perimeter route 50, distance traveled (e.g., rotation of locomotion wheels 14) and changes in orientation due to turning may be monitored. For example, a record of distances and orientations may be stored in data storage 34. The measured distance and orientation data may be interpreted to yield a map of the pool perimeter.

In the case of a rectangular pool 40, it may be sufficient to record distance traveled only along two segments of perimeter route 50 that cover the entire length of two perpendicular walls. The recorded travel distances may then give the length and width of rectangular pool 40. In the example shown, a distance traveled along route segment 50a represents the length of pool wall 41b and the length of rectangular pool 40. The distance traveled along route segment 50b represents the length of pool wall 41c and the width of rectangular pool 40.

An assessed pool characteristic may include a location of an obstacle in the pool, e.g., on the floor of the pool. The obstacle may include a structure of the pool, such as a raised drain, or an object that cannot be moved or removed by robotic pool cleaner 10 and that has been placed or dropped into the pool. The location of the obstacle may be specified relative to a designated reference point.

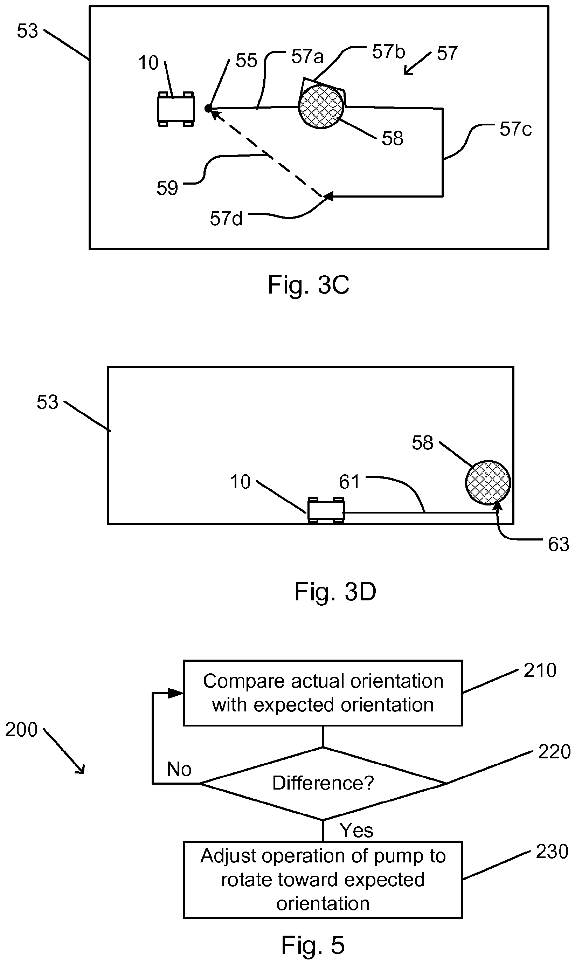

Fig. 3C schematically illustrates designation or a reference point as determination of a location of an obstacle relative to the reference point during execution of the navigation method depicted by the flowchart in Fig. 2.

Although a pool 53 in the form of a rectangular pool 40 is shown in Fig. 3C for convenience, the shape of the pool is irrelevant.

At one point during travel of robotic pool cleaner 10 in pool 53, the current location of robotic pool cleaner 10 may be designated as reference point 55. For example, controller 31 may be configured to designate a current location of robotic pool cleaner 10 as reference point 55 at a predetermined time or event during operation in pool 53. For example, a location where robotic pool cleaner 10 is activated or where it begins cleaning pool 53 may be designated as reference point 55.

After designation of reference point 55, robotic pool cleaner 10 may depart from reference point 55 by travelling along path 57. During travel along path 57, controller 31 may monitor its distance traveled and its turning angles. Controller 31 may thus continually calculate its current position relative to reference point 55.

For example, controller 31 may be configured to store in data storage 34 a distance and direction traveled along a segment of path 57. Whenever a direction of travel of robotic pool cleaner 10 changes, the length and direction of the previous segment may be stored in data storage 34. Thus, at any point in traveling along path 57, controller 31 may perform vector addition of the various path segments so as to determine a current position of robotic pool cleaner 10 relative to reference point 55.

In some cases, robotic pool cleaner 10 may, during its travel along path 57, encounter an obstacle 58. For example, robotic pool cleaner 10 may find that continuing travel along path segment 57a is blocked by obstacle 58. Controller 31 may control robotic pool cleaner 10 to travel along detour path segment 57b in order to circumvent obstacle 58. The monitored changes in direction and distances travelled while traveling along detour path segment 57b may be analyzed to yield a position of obstacle 58 relative to reference point 55. The position of obstacle 58 may be recorded for future reference in data storage 34. After travelling along detour path segment 57b to circumvent obstacle 58, robotic pool cleaner 10 may continue to travel along path segment 57c.

In some cases, obstacle 58 may be located near a corner of pool 53. For example, a raised drain of pool 53 may be located near a corner of pool 53.

Fig. 3D schematically illustrates detection of an obstacle in a corner during execution of the navigation method depicted by the flowchart in Fig. 2.

For example, when robotic pool cleaner 10 travels along path 61 to a corner of pool 53, controller 31 may attempt to turn robotic pool cleaner 10 at point 63. Interference with turning robotic pool cleaner 10 may be interpreted as indicating an obstacle 58 at point 63. For example, controller 31 may monitor a reading by a sensor of sensors 30 (e.g., a compass, gyroscope, accelerometer, or other sensor) to indicate an actual rate of turning (e.g., change in orientation angle per unit time) of robotic pool cleaner 10. The measured actual rate of turning may be compared with an expected rate of turning (e.g., as based on one or more control commands that are generated by controller 31 for causing one or more of motor 28, transmission 20, or another component to cause robotic pool cleaner 10 to turn at a particular rate). If the measured actual rate of turning is sufficiently different from the expected rate (e.g., as compared with a threshold ratio or difference), than presence of obstacle 58 may be indicated. The location of obstacle 58 (e.g., relative to reference point 55 or relative to a perimeter or dimensions of pool 53) may be recorded for later reference in data storage 34.

An assessed pool characteristic may include an indication of a traction limit between locomotion wheels 14 (e.g., via tracks 16 or other traction-increasing structure) and the pool surface. For example, the traction limit may include a maximum speed of rotation of locomotion wheels 14 without slipping relative to the pool surface. For example, feedback from a brushless motor 28 or a rotation sensor of brush-type motor may be analyzed to yield a speed of rotation of a rotating shaft or other rotating element of motor 28, of transmission 20, or of locomotion wheels 14. Similarly, electrical power that is supplied to motor 28 may also be monitored by controller 31. An increase in the ratio of speed of rotation to motor power (e.g., above a predetermined threshold ratio) may be indicative of slipping. For example, controller 31 may be configured to gradually increase the power that is provided to motor 28 until slipping is detected at a slipping power. In some cases, the maximum slipping power may be compared with previously obtained data (e.g., either from data that is provided by a manufacturer or developer of robotic pool cleaner 10, or that was obtained during previous operation of that robotic pool cleaner 10) to identify the pool surface, or a characteristic of the pool surface, with a previously identified type of pool surface.

In some cases, the traction at various positions in pool 53 may be mapped, e.g., relative to reference point 55. For example, the traction may vary from location to location due to dirt or debris that is on the pool surface at each point, due to changes in slope of the pool floor or walls at different positions, or other causes of local variations in traction.

The assessed pool characteristic may be utilized in setting the value of a parameter of operation of robotic pool cleaner 10 (block 120). Setting the value of the parameter may include modifying a previous value (e.g., an initial or default value, or a previously modified value) of the parameter of operation.

For example, a measurement of dimensions of a rectangular pool 40, or of a perimeter of a pool 53 of any shape, may be utilized to calculate an operating time of robotic pool cleaner 10. Controller 31 may be configured to operate robotic pool cleaner 10 for a period of time that may have been previously determined to enable robotic pool cleaner 10 to clean the pool. The operating time may depend on the size of the pool. Controller 31 may apply an algorithm that calculates the duration of the operating time based on the size of the pool. The algorithm may also take into account a maximum speed of travel of robotic pool cleaner 10, e.g., based on assessment of traction limits, or other dimensions or characteristics of the pool or its usage.

For example, an algorithm may assume that the operating time is proportional to the area of the pool floor. An algorithm may take into account one or more additional factors, such as maximum speed, depth of the pool, presence of obstacles, shape of the pool, or other factors.

A measured shape of the pool, e.g., derived from a perimeter of the pool, may be utilized to calculate a direction of travel of robotic pool cleaner 10 after encountering a curved pool wall. The direction of travel away from the wall may not be perpendicular to the wall, along a normal to the wall, as it typical when cleaning a rectangular pool 40. For example, when the walls of the pool are curved (e.g., circular, oval, or other curved shape), robotic pool cleaner 10 may efficiently cover the pool surfaces to clean the surfaces by traversing the pool along substantially parallel paths. Thus, the direction of travel after encountering a curved pool wall may not be directly determined by the direction of the normal to the wall.

Fig. 4 schematically illustrates selection of a direction of travel after encountering a curved wall during execution of the navigation method depicted by the flowchart in Fig. 2.

Robotic pool cleaner 10 may operate within curved pool 60. Robotic pool cleaner 10 may approach wall section 64 of curved pool 60 along approach path 62a. Upon encountering wall section 64, controller 31 may control robotic pool cleaner 10 to depart from wall section 64 along a departure path 62b whose direction does not coincide with, or is not parallel to, wall normal 66. For example, the direction of departure path 62b may be selected to be parallel to approach path 62a. As another example, the direction of departure path 62b may be determined in accordance with the directions of approach path 62a and of wall normal 66 at wall section 64. For example, the location of wall section 64, and thus the curvature or direction of wall normal 66 at wall section 64, may be determined by monitoring the location of robotic pool cleaner 10 relative to a reference point 55 as well as monitoring the orientation of robotic pool cleaner 10 relative to a mapped shape of curved pool 60 (e.g., mapped while monitoring the location of robotic pool cleaner 10, and thus of the map, relative to reference point 55).

A monitored location of robotic pool cleaner 10 relative to reference point 55 may be utilized to return robotic pool cleaner 10 to reference point 55. For example, after traveling along path 57 (Fig. 3C), robotic pool cleaner 10 may be monitored to be currently be located at path end point 57d. When located at path end point 57d, controller 31 may issue or receive a command to return to reference point 55. For example, when a time period for operation within a pool 53 has elapsed, controller 31 may be configured to automatically operate robotic pool cleaner 10 to return to reference point 55. As another example, an operator of robotic pool cleaner 10 may operate a control to issue a command to return to reference point 55. Controller 31 may then operate robotic pool cleaner 10 to travel along return path 59 to return to reference point 55 from path end point 57d. For example, the location of reference point 55 may have been selected as a convenient location for servicing robotic pool cleaner 10 or for extracting robotic pool cleaner 10 from pool 53.

A sensed traction limit may be utilized to limit the power that is provided to motor 28 in order to prevent slipping and maximize traction. Alternatively or in addition, the sensed traction limit may be utilized to determine an outflow rate from outflow port 24 (or, an inflow rate to intake port) so as to increase the normal force between locomotion wheels 14 and the pool surface. Increasing the normal force may increase the traction, and thus enable increasing the maximum power that may be provided to motor 28 without causing slipping.

An orientation of robotic pool cleaner 10 may be monitored as it climbs or descends a wall of a pool 53. Operation of robotic pool cleaner 10 may be controlled to maintain contact of robotic pool cleaner 10 with the wall.

Fig. 5 is a flowchart depicting a method of navigating a robotic pool cleaner while ascending or descending a wall, in accordance with an embodiment of the present invention. Fig. 6 schematically illustrates a robotic pool cleaner that is executing the method shown in Fig. 5.

Wall navigation method 200 may be executed by controller 31 of robotic pool cleaner 10 when robotic pool cleaner 10 is ascending or descending a pool wall 71.

During ascending or descending pool wall 71, e.g., between pool floor 73 and water level 70, an actual orientation of robotic pool cleaner 10, e.g., as measured by one or more orientation sensors (e.g., gyroscope, tilt sensor, compass, or other sensor), may be compared with an expected orientation (block 210). For example, an expected orientation may be approximately equal to the slope of pool wall 71 (e.g., vertical). While ascending or descending pool wall 71, suction pump 26 may be operated to cause, or increase a rate of, intake of water through intake port 22 and outflow 74 of water through outflow port 24. The effect of outflow 74 may be to maintain contact between locomotion wheels 14 (or tracks 16) and pool wall 71. Thus, robotic pool cleaner 10 may be prevented from tipping, e.g., with backward tipping motion 72 (pitch), with sideways tipping (yaw), lateral tipping (roll), or a combination of the above, or from sliding downward. Furthermore, traction between locomotion wheels 14 and pool wall 71 may be maintained, to enable controlled motion of robotic pool cleaner 10 on pool wall 71.

The comparison may check for a difference between the actual orientation and the expected orientation (block 220). Alternatively or in addition, a tipping motion, such as backward tipping motion 72 or another tipping motion, may be detected by one or more a sensors 30 that are configured to sense a rate of change of an orientation (e.g., a gyroscope, accelerometer, or other sensor).

If no difference is found, monitoring of the actual orientation and comparing with the expected orientation continues (returning to block 210).

If a difference is found, controller 31 may control operation of suction pump 26 in coordination with motor 28 of robotic pool cleaner 10 to rotate robotic pool cleaner 10 toward the expected orientation (block 230). A difference may indicate the some or all of locomotion wheels 14 may no longer be in contact with pool wall 71. For example, rotation toward the expected orientation may maintain contact between locomotion wheels 14 and pool wall 71. Increasing a speed of operation of suction pump 26 may increase outflow 74 and restore contact between locomotion wheels 14 and pool wall 71 (e.g., correcting pitch and roll). For example, increasing the speed of operation of suction pump 26 in coordination of rotating locomotion wheels 14 in a direction that tends to rotate robotic pool cleaner 10 toward the expected orientation (e.g., to propel robotic pool cleaner 10 toward a vertex of an angle between the current and expected orientations, or otherwise) may tend to rotate robotic pool cleaner 10 in a direction that is opposite to backward tipping motion 72. Once the contact is restored, locomotion wheels 14 may be operated to restore an expected orientation (e.g., to correct any yaw).

According to some embodiments of the present invention, a system and method of controlling a pool cleaning robot so as to accurately direct its travel on the surface of the pool, is provided.

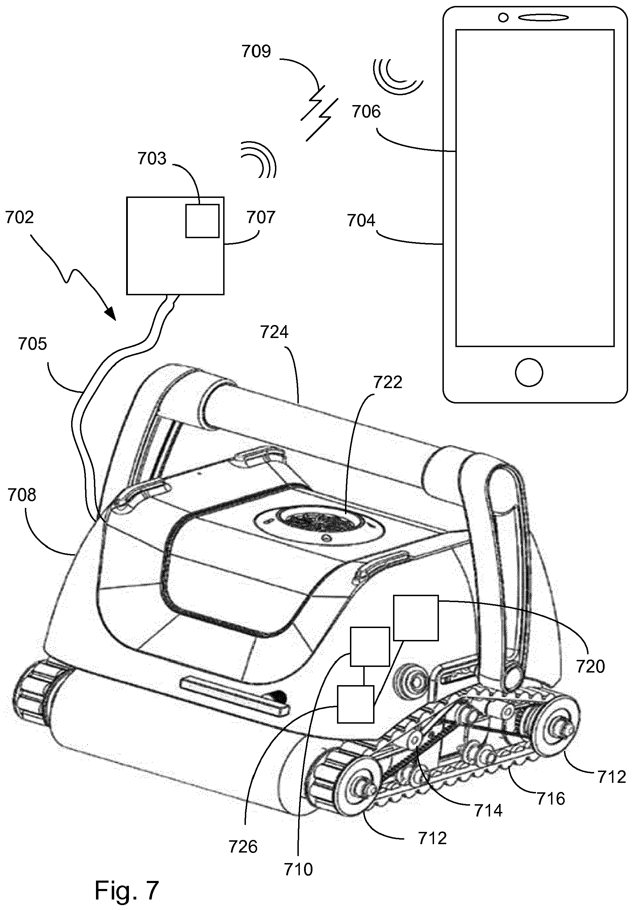

Fig. 7 illustrates a robotic pool cleaner 702, remotely controlled by a hand-held portable communication device 704 (e.g., a smartphone), according to some embodiments of the present invention. Typically, a robotic pool cleaner 702 (hereinafter - "pool cleaner" or "cleaner", for brevity) has a propulsion drive, which in some embodiments comprises an electric drive motor 710 operatively coupled to drive tracks or wheels 712. In some embodiments, the motor 710 is linked to the wheels 712 via a transmission gear. In some embodiments, the motor 710 is linked to the wheels 712 via belt 714 (there may be some embodiments that have two or more belts, e.g., one on either sides of the pool cleaner, as shown in this figure, while other embodiments may have just one belt). In some embodiments of the invention, caterpillar tracks 716 may be provided, linking the wheels 712, so to aid the pool cleaner in locomotion.

An electric pump 720, which may draw its electricity from the mains power supply 707, typically via a cable 705, is used to suck the water (or any other liquid that is contained in the pool) into a debris filter (not shown in this figure) via an inlet (not shown in this figure) that may be located at the bottom of the housing 708 of pool cleaner 702. While debris and dirt that is sucked into the pool cleaner may be trapped in the debris filter, water is expelled from the pool cleaner via outlet 722, which may be located on an upper surface (or on any other surface) of the pool cleaner 702. A handle 724 may be provided for convenient handling of the pool cleaner 702.

Alternatively, in some other embodiments, the propulsion drive may be a water jet propulsion drive, which is employed to propel the robot, the jet being produced by the suction pump or an independent pump.

In some embodiments, a propulsion drive (e.g., motor 710 in the embodiment shown in Fig. 1) may be controlled by an electronic controller 726. The controller may include a microprocessor or microcontroller, memory (which may be incorporated within the microprocessor or microcontroller), motor control circuits for controlling the speed and/or rotational direction of at least one motor, and preferably also communication module. The controller may also include one or more sensors for sensing the position, movement or orientation of the pool cleaner. Such sensors may include, but are not limited to, accelerometers, gyros, compasses, proximity sensors, pedometers or any combination thereof. The communication module may be a serial bus according to any known protocol, such as RS485, may be based on a dedicated, unique protocol, or may be modulated over the power supply cable 705. The robot controller may communicate with the power supply of the robotic pool cleaner, which in some embodiments may be located outside the pool, typically beyond a minimal predetermined distance from the edge of the pool. In an alternative embodiment, the robotic pool cleaner may communicate wirelessly via an antenna located on a part of the pool cleaner (e.g., the housing, handle, etc.) which extends beyond the surface of the pool, for example, when the robotic pool cleaner climbs a vertical surface of the pool to the waterline. Controller 726 may receive commands via the communication module to turn the pool cleaner in different directions (e.g., clockwise, anticlockwise), to change the direction of travel, to advance a selected distance, to advance until contact with a wall is detected, to turn a selected angle, to begin or terminate a cleaning cycle, to climb a wall, or a sequence of any of these commands, etc.. The controller 726 may also transmit information pertaining to its' actual movement as detected by its' sensors. The controller 726 may also transmit data pertaining to the quality or characteristics of the water (or other liquid) it is submerged in, as detected by its' sensors. Such data may include, for example, water temperature, free chlorine concentration or level, and pH level of the water.

According to some embodiments of the invention, a computer program (hereinafter - "application") is provided, typically running on a portable computing device 704, such as a smartphone, tablet computer, laptop, etc., (hereinafter - also "smartphone" for brevity) which may provide a user interface for an operator of the pool cleaner. The application, which may include a graphical user interface, may allow user interaction with the robotic pool cleaner.

The application may employ some or all of the smartphone 704 features and capabilities, for computation, input and output, such as, its processor, graphical processor, memory, input/output (I/O) device and/or I/O interface (e.g., camera, touchscreen 706, keyboard, etc.), sensors (e.g., gyroscope, accelerometer, microphone, etc.), etc.

According to some embodiments of the present invention, smartphone 704 may communicate with pool cleaner 702, and in particular with controller 726 over a communication channel 709, or channels. In some embodiments the communication may be carried out using a short-range communication technology (e.g., Bluetooth ™), for example, between smartphone 704 and a communication module 703 of mains power supply 707, which may further communicate with controller 726 over a communication channel on cable 705.

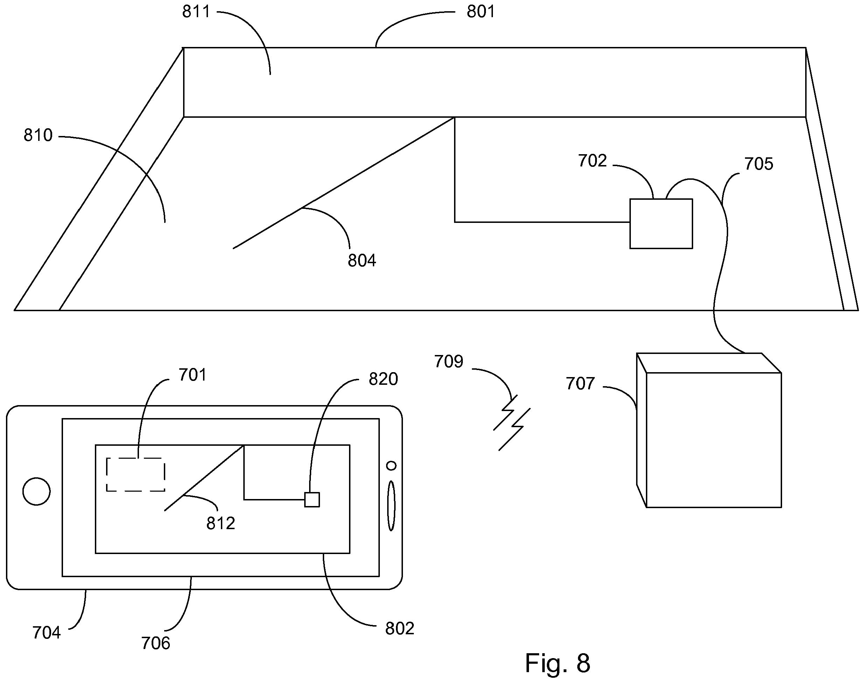

Fig. 8 illustrates method and device for remotely controlling a robotic pool cleaner according to some embodiments of the present invention.

According to some embodiments of the invention, a user may activate a dedicated application on a smartphone 704. The application may include a graphical user interface (GUI) that is designed to present to the user graphics and information on the screen 706 of smartphone 704.

In some embodiments of the present invention, such system and method may be used for transmitting at least one parameter of the pool outline or contours to the pool cleaning robot.

In some embodiments of the present invention, such system and method may be enable a robotic pool cleaner to transmit to an external computing device coordinates or location information in a swimming pool, such as for example location information on the location of that cleaner or other such cleaner or cleaners, or location of obstacles.

For example, the GUI may include an illustration 802 of a pool, which may be selected from a group of illustrations of pools (e.g., typical shapes of pools, such as, for example, rectangle, circle, ellipse, and other shapes). In some embodiments of the invention, the illustration of the pool is determined based on obtaining location information pertaining to the actual pool, for example GPS data, or other information. In some embodiments of the invention, the user registers once and enters information relating to the pool cleaner and/or the pool cleaning system. In some other embodiments of the invention, location data may be obtained from the pool cleaner, when it travels inside the pool. For example, the pool cleaner may include a GPS receiver and every time the pool cleaner reaches the waterline (e.g., climbing a side wall or otherwise surfacing), exposing an antenna, wireless receiver or transmitter (e.g., when it changes its direction of travel as a result of contacting the wall), location data may be transmitted from the pool cleaner to the controller, or saved and transmitted at a later time, so that eventually the location of the walls of the pool, and/or the contour (shape) of the pool may be determined. In some other embodiments, location information and/or data on the location and/or the shape of the pool may otherwise be obtained. A graphical presentation (e.g., illustration) of the pool may be thus shown by the application on the screen 706 of smartphone 704. In some embodiments, the dimensions and shape of the illustrated pool may be scaled to the actual size and shape of the pool.

In some embodiments, the user may input a command via the user input interface, for example, by tapping, sliding a finger, making a gesture, inputting text using a real or virtual keyboard, providing a vocal command, etc., for directing a pool cleaner to a particular target position on a pool surface, to follow a particular path in the pool, to perform a pattern of movement, or to maintain within or outside an indicated zone of the pool. In some embodiments of the invention, the user may command the pool cleaner to select different operating modes for the pool cleaner in or outside the indicated zone, for example, alter the suction level of the pump, stay longer in or outside that zone, travel slower or faster, climb or refrain from climbing the walls, etc.

By means of the user input interface, e.g., touch input screen, which is typically a feature of portable computing devices such as tablet computers and smartphones, the user can point to the actual position of the pool cleaner in the pool (e.g., point at a graphical representation of the pool cleaner on the graphical representation of the pool on the display of the smartphone, or point at a position on the graphical representation of the pool on the display of the smartphone), then move the finger or otherwise indicate, e.g., by a gesture, a desired path, to the position on the graphical representation of the pool displayed on the screen representative of the new position of the cleaner where the user desires it to travel to. The application may convert the finger movement to a series of commands of directions or vectors and distance to travel between the two points, and transmit the sequence to the pool cleaner power supply, which may transmit the commands to the cleaner itself. The cleaner may then travel to the position in the actual pool referenced by the user in the diagram or outline of the pool in the user interface. For example, the user may indicate a path 812 on touchscreen 706, by tapping, sliding a finger, making a gesture, or by inputting text using a real or virtual keyboard, providing a vocal command of a desired course for the robotic pool cleaner to travel across the surface of the pool. In some embodiments of the invention, a graphical representation 820 of pool cleaner 702 may be presented on screen 706, to aid the user in locating the current location of the pool cleaner or show a position in the pool that the user wishes for the pool cleaner to assume. In some embodiments, in order to distinguish between a current position of the pool cleaner in the pool and a desired position for the pool cleaner different colors or different graphical representations may be used.

In some embodiments, such system and method may be used to pre-program a path of a pool cleaner's travel on a pool surface.

In some other embodiments of the invention, the user may select or otherwise input a command to cause the pool cleaner to travel a path having a particular pattern. In some embodiments, the pattern for the selected path may be selected from a list of available patterns that may be presented to the user, by the application, on screen 706 of smartphone 704.

The input, or selected, path 812 may be, in some embodiments of the present invention, translated by processor 701 (shown in dashed lines, inside smartphone 704) to a command, or series of commands, which may be transmitted to controller 726 (see Fig. 1) of the pool cleaner 702. The controller 726 may then cause the pool cleaner 702 to travel in the desired path 804.

In some embodiments, the smartphone may transmit information relating to its position to the pool cleaner. Typically, the smartphone is held by the operator of the pool cleaner, and therefore the position of the smartphone coincides with the position of the operator. The position of the smartphone (in other words, the position of the user) may be indicated graphically on the representation of the pool displayed on the screen of the smartphone.

When the pool cleaner is operating in a shallow part of the pool, or is oriented vertically, at or near the pool waterline, the pool cleaner may obtain via GPS (e.g., via an antenna, when the pool cleaner is surfaced) data relating to its own position and may calculate its own position relative to that of the smartphone, and hence its position relative to the position of the operator. When submerged, the pool cleaner may also calculate its current position by measuring the direction (e.g., by a gyroscope or magnetic compass) and distance (as a function of robot speed and time traveled) of travel from the last position fixed (e.g., by GPS). The current location of the pool cleaner, either when surfaced (by determining its exact location) or when submerged (calculated) may be presented on the graphical representation of the pool as displayed on the smartphone screen.

The robot may then calculate a vector of travel to the part of the pool nearest to the position of the smartphone (and thus, to the operator). The position of the smartphone, as determined from its GPS receiver, may be transmitted by the smartphone to the robot at predetermined intervals, and the robot may subsequently re-calculate the required direction of travel to reach the part of the pool closer to the operator.

The robot may be commanded to interrupt, or cease its current operation and to travel to the known position of the operator issuing the command - a "homing" instruction which will cause the pool cleaner to travel to the operator. For example, if the operator notices a patch of debris close to where he or she is standing, the operator may initiate a "homing" command, causing the robot to alter its course of travel and move to the part of the pool closest to where the operator is standing. The pool cleaner may be commanded to stop upon contact with the pool wall, or to continue to the pool waterline, or to restart its cleaning cycle from the point of contact with the pool wall, depending on the command issued.

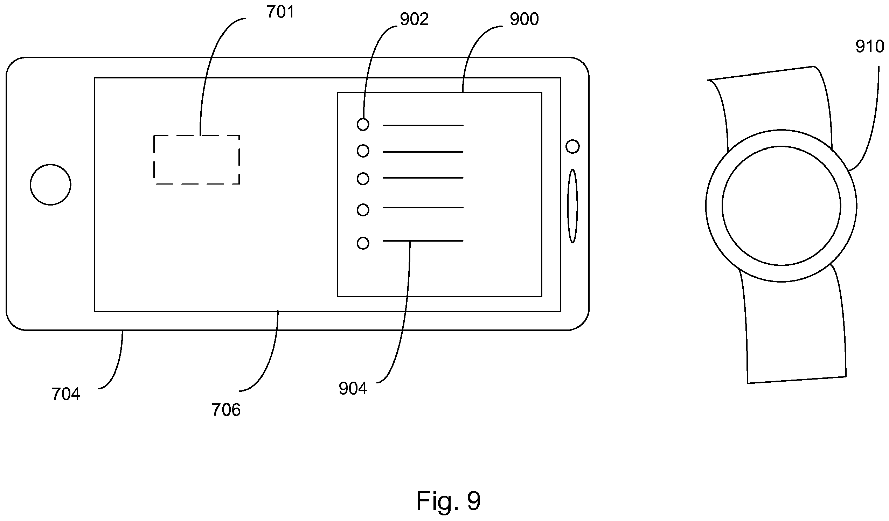

Fig. 9 illustrates a smartphone with GUI of a control application for a pool cleaner, and a cooperating smart-watch, according to some embodiments of the present invention.

In some embodiments of the present invention, the application may be designed to operate in the following manner:
a. a menu screen 900 may be presented to the user, from which the user may select various functions 904, by tapping or otherwise selecting a text describing each function or selecting a bullet 902 or other graphical element associated with that function;
b. the user selections are translated into commands which are transmitted from smartphone 704 to the power supply 707 of the robotic pool cleaner 702 via a communication channel 709, e.g., wireless communication standard such as Bluetooth ™, Wi-Fi, etc.;
c. the power supply transmits the commands, e.g., using a physical protocol, such as a serial bus which communicates the commands to the pool cleaner (e.g., to the controller 726).

The robotic pool cleaner may also transmit data from the on-board controller 726 via a communication channel (e.g., serial communication) to the power supply 707, which may further transmit the data to the smartphone 704 for display to the user on screen 706.

The presented data may be, for example, sensor data from one or more sensors mounted on the pool cleaner, data related to the control of the pool cleaner, and/or acknowledgement of commands sent to the pool cleaner. The data may be further processed (for example filtering, or combining data from two or more sensors, or from sequential readings of one sensor) by the pool cleaner controller, or by the power supply, or by the smartphone, or any combination thereof. In some embodiments of the invention, processing of sensor data may be performed by the pool cleaner controller.

In some embodiments of the invention, the user may employ an imaging sensor of the smartphone (e.g., a camera) to create a digital image of the pool outline. The application may process the image, using an image processing technique, to retrieve the outline of the pool and scale the true dimensions of each wall or contour, for example, according to an initial reference input by the user. A pedometer function, either provided as part of the portable computing device or by an external device such as a smart-watch 910, which can communicate with the smartphone 704 (e.g., via Bluetooth or WiFi communication channel), may be employed to input the outline and dimensions of the pool. By this method, the user walks around the perimeter of the pool, while the pedometer function records the movements of the user and transmits the data to the application. The application may then display an outline of the pool to the user on screen 706, the outline serving as a reference for controlling movement of the pool cleaner in the pool.

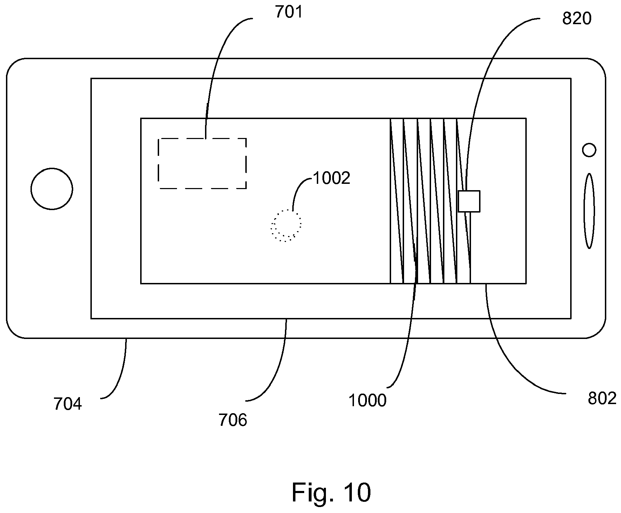

Fig. 10 illustrates a smartphone with GUI of a control application for a pool cleaner, according to some embodiments of the present invention.

The user may also input a cleaning command, for example, by rapidly moving a finger in a fore and aft, circular, repetitive, or periodic movement 1000 over screen 706 at the position on the pool outline where the user desires the cleaner to work more thoroughly. Alternatively, a double tap 1002 On screen 706 may initiate the cleaning command at the desired position in the pool corresponding to the position of the double tap 1002 on the pool shape 802 on the screen 706. When receiving the cleaning command, the pool cleaner is caused to perform fore and aft motion with limited travel and turning motion so as to clean the immediate area more thoroughly.

At the end of the cleaning cycle, the operator may initiate a command to be transmitted to the pool cleaner to move to a designated part of the pool where it is convenient to retrieve the cleaner and remove it from the pool for cleaning, storage etc. In some cases, it may be desired to remove the pool cleaner from the pool at the same location it was introduced to the pool, and at this location the power cable, in the case of a pool cleaner powered by a poolside power supply, crosses the pool edge onto the surface of the pool. The command to move the pool cleaner towards the position for retrieval may initiate operation of a camera incorporated in the smartphone, which may obtain an image of the pool, and determine the position of the pool cleaner on the surface of the pool and the position where the pool cleaner power cable crosses the pool edge. The handheld controller, or smartphone, may then transmit a sequence of commands to the pool cleaner, directing its travel towards the position where the cable enters the water. The pool cleaner may be commanded to stop upon detecting contact with the pool wall, or may continue to climb to the waterline.

The user may also indicate the point within the pool where it is desired that the pool cleaner be located at termination of the cleaning cycle. For example, should the user find that a particular part of the pool is most convenient for retrieving the pool cleaner, the user may tap on a selected position on the pool 802 displayed on screen 706 of smartphone 704 to cause the cleaner to be directed to the corresponding point in the pool and a command may be issued by the application to reference the pool cleaners' movement relative to the position. At the end of the cleaning operation (e.g. cleaning cycle), the pool cleaner may retrace its' path to this position, as previously stored in a memory used by the controller.

In some embodiments of the invention, the user may also determine in advance of the pool cleaners' operation, the intended path of travel. For example, the user may prefer that for a particular cleaning cycle, the pool cleaner thus remaining in a certain part of the pool, for example the deeper portion or section near overhanging vegetation which is prone to accumulating more dirt than, perhaps, other parts of the pool. The user may indicate the approximate desired path of the pool cleaner within the pool by moving a finger over the outline of the pool as displayed on the portable computing devices' screen. Alternatively, the user may indicate, with finger movement or other manual gesture, the part of the pool surface which it is desired for the pool cleaner to cover. The application may translate the position indicated on the screen to a series of commands defining the maximum distance the pool cleaner is to travel away from a pool wall before reversing direction.

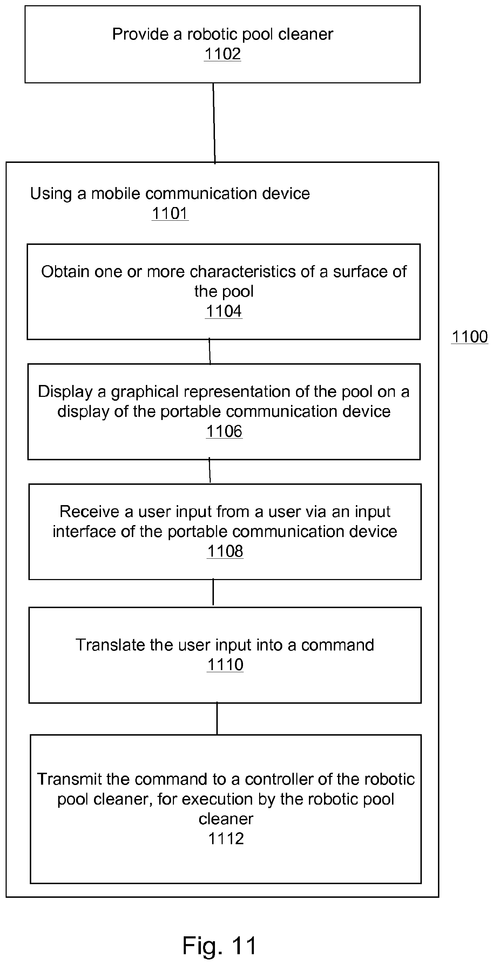

Fig. 11 illustrates a method for remotely operating a robotic pool cleaner, according to some embodiments of the present invention. Method 1100 may include providing 1102 a robotic pool cleaner comprising a housing; a propulsion drive configured to propel the robotic pool cleaner along a surface of a pool; a pump for drawing liquid from the pool into the housing, so as to trap dirt and debris from the surface of the pool into a filter; a controller configured to communicate with a portable communication device, and control the propulsion drive in accordance with commands received from a the portable communication device. The method 1100 may further include, using a mobile communication device 1101, obtaining 1104 one or more characteristics of a surface of the pool; displaying 1106 a graphical representation of the pool on a display of the portable communication device; receiving 1108 a user input from a user via an input interface of the portable communication device; translating 1110 the user input into a command; and transmitting 1112 the command to a controller of the robotic pool cleaner, for execution by the robotic pool cleaner.

It should be understood with respect to any flowchart referenced herein that the division of the illustrated method into discrete operations represented by blocks of the flowchart has been selected for convenience and clarity only. Alternative division of the illustrated method into discrete operations is possible with equivalent results. Such alternative division of the illustrated method into discrete operations should be understood as representing other embodiments of the illustrated method.

Similarly, it should be understood that, unless indicated otherwise, the illustrated order of execution of the operations represented by blocks of any flowchart referenced herein has been selected for convenience and clarity only. Operations of the illustrated method may be executed in an alternative order, or concurrently, with equivalent results. Such reordering of operations of the illustrated method should be understood as representing other embodiments of the illustrated method.

Different embodiments are disclosed herein. Features of certain embodiments may be combined with features of other embodiments; thus certain embodiments may be combinations of features of multiple embodiments. The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method of remotely operating a robotic pool cleaner wherein the robotic pool cleaner comprises a housing; a propulsion drive configured to propel the robotic pool cleaner along a surface of a pool; a pump for drawing liquid from the pool into the housing, so as to trap dirt and debris from the surface of the pool into a filter; and a controller configured to communicate with a portable communication device, and control the propulsion drive in accordance with commands received from a portable communication device;
the method comprising, using the portable communication device:
obtaining one or more characteristics of a surface of the pool;
displaying a graphical representation of the pool on a display of the portable communication device;
receiving a user input from a user via an input interface of the portable communication device;
translating the user input into a command; and
transmitting the command to a controller of the robotic pool cleaner, for execution by the robotic pool cleaner.

2. The method of claim 1, wherein obtaining one or more characteristics of a surface of the pool comprises receiving data transmitted from the robotic pool cleaner or receiving data input via a user input interface of the portable communication device.

3. The method of claim 1 or 2, further comprising, using the portable communication device, displaying a current location of the pool cleaner in the pool on the graphical representation of the pool as displayed on the display.

4. The method of any of claims 1 to 3, wherein the user input comprises indication of a desired target position in the pool for the pool cleaner to travel to.

5. The method of any of claims 1 to 4, wherein the user input comprises indication of a particular path to be traveled by the pool cleaner.

6. The method of any of claims 1 to 5, wherein the user input comprises indication of a pattern of movement.

7. The method of any of claims 1 to 6, wherein the user input comprises indication to maintain a position of the pool cleaner within or outside an indicated zone of the pool.

8. The method of any of claims 1 to 7, wherein the user input is selected from the group of inputs consisting of tapping, sliding a finger, making a gesture, inputting text using a real or virtual keyboard, and providing a vocal command.

9. The method of any of claims 1 to 8, wherein the user input comprises a homing instruction and wherein the command causes the pool cleaner to travel toward a current location of the user.

10. The method of any of claims 1 to 5, wherein the obtaining of said one or more characteristics of a surface of the pool comprises recording movement of the user around a perimeter of the pool.

11. The method of any of claims 1 to 10, further comprising using a camera of the portable communication device for the user input.

12. A computer readable medium comprising instructions which when implemented in a processor of a portable communication device cause the device to execute a method according to any preceding claim.

13. A robotic pool cleaner comprising:
a housing;
a propulsion drive configured to propel the robotic pool cleaner along a surface of a pool;
a pump for drawing liquid from the pool into the housing, so as to trap dirt and debris from the surface of the pool into a filter; and
a controller configured to communicate with a portable communication device, and control the propulsion drive in accordance with commands received from a the portable communication device;
**characterized in that** the controller is further configured to receive, and cause the robotic pool cleaner to execute, a command from a portable communication device that has obtained one or more characteristics of a surface of the pool; displayed a graphical representation of the pool on a display of the portable communication device; received a user input from a user via an input interface of the portable communication device; translated the user input into a command; and transmitted the command to a controller of the robotic pool cleaner, for execution by the robotic pool cleaner.

14. A robotic pool cleaning system comprising:
a robotic pool cleaner comprising a housing; a propulsion drive configured to propel the robotic pool cleaner along a surface of a pool; a pump for drawing liquid from the pool into the housing, so as to trap dirt and debris from the surface of the pool into a filter; and a controller configured to communicate with a portable communication device, and control the propulsion drive in accordance with commands received from a portable communication device; and
a portable communication device configured to implement a method according to any of claims 1 to 11.
